# EUROPÄISCHE PATENTSCHRIFT

(11) **EP 0 834 974 B1**
(45) Veröffentlichungstag und Bekanntmachung des Hinweises auf die Patenterteilung: **11.12.2002**
(21) Anmeldenummer: 97117038.6
(22) Anmeldetag: 01.10.1997
(51) Int. Cl.: H02B 1/01, H02B 1/30

(54) **Rahmengestell für einen Schaltschrank**
Frame for a switchgear cabinet
Baie pour une armoire de distribution électrique

(30) Priorität: 04.10.1996 DE 29617251 U; 14.04.1997 DE 29706667 U
(43) Veröffentlichungstag der Anmeldung: 08.04.1998
(73) Patentinhaber: ELEK GMBH, D-41470 Neuss (DE)
(72) Erfinder: Obsommer, Nikolaus, 41517 Grevenbroich (DE); Rübsam, Hans J., 40670 Meerbusch (DE)
(74) Vertreter: Palgen, Peter, Dr. Dipl.-Phys.

(56) Entgegenhaltungen:
- EP-A- 0 442 826
- DE-A- 1 465 347
- DE-A- 2 437 645
- DE-A- 4 135 108
- DE-C- 19 529 270
- DE-U- 29 706 667
- VON H.EDER: "feinwerktechnische verbindungen durch plastisches verformen" FEINWERK TECHNIK, Bd. 65, Nr. 4, April 1961, Seiten 135-152, XP002081727

## Beschreibung

Die Erfindung bezieht sich auf ein Rahmengestell der dem Oberbegriff des Anspruchs 1 entsprechenden Art.

Rahmengestelle dieser Art dienen insbesondere dazu, zusammen mit anderen Bauteilen das Gehäuse eines Schaltschranks für elektrische Anlagen zu bilden.

An die technischen Anforderungen eines derartigen Rahmengestells werden besondere Anforderungen gestellt. Wegen der Vielfalt möglicher Anwendungen müssen die Rahmengestelle möglichst variabel aufbaubar sein, um die für den individuellen Einsatzzweck erforderliche Gerätekonstellation optimal aufnehmen zu können. Gleichermaßen muß das Rahmengestell insgesamt eine möglichst große Stabilität aufweisen, da insbesondere durch eingebaute elektrische Geräte hohen Eigengewichts sowie durch von Hand zu betätigende Schaltelemente, die teilweise erhebliche Betätigungskräfte erfordern, die mechanischen Belastungen eines Schaltschranks erheblich sind. Des weiteren ist es selbstverständlich stets das Ziel, die zu einem Rahmengestell zusammensetzbaren Bauteile derart auszugestalten, daß diese möglichst preisgünstig in ihrer Herstellung sind und auf einfache Weise zu einem Rahmengestell ausreichend großer Stabilität auf einfache Weise zusammensetzbar sind.

Rahmengestelle, die diesen Anforderungen Rechnung tragen sollen, sind in vielfältigen Ausführungsformen bekannt. Gemeinsam ist all diesen, daß sie längs den Kanten des Gestells verlaufende vertikale Stützen und waagerechte Holme umfassen, welche mit Eckverbindern, die in die Enden der Stützen und Holme einführbare Schenkel umfassen, miteinander verbunden sind (vgl. beispielsweise die DE 36 08 984 A1 oder die DE 41 35 108 A1).

Zur Festlegung der Stützen oder Holme an den Eckverbindern ist es zum einen bekannt, die Bauteile miteinander zu verschweißen.

Diese Art der Festlegung beinhaltet jedoch die folgenden Nachteile.
a) Das Verschweißen ist zeit- und damit kostenintensiv.
b) Die Anwendung der Verschweißtechnik setzt voraus, daß die Streben und Holme sowie die Eckverbinder aus miteinander verschweißbaren Materialien bestehen.
c) Die Bauteile können vor dem Verschweißvorgang nicht vollständig mit einem Korrosionsschutz - beispielsweise einer Lackierung - versehen werden.

Weiterhin ist es bekannt, die Stützen und Holme mit den Eckverbindern zu verschrauben, wobei üblicherweise in den Eckverbindern eine Gewindebohrung sowie in den Stützen bzw. Holmen in zusammengesetztem Zustand mit den Bohrungen der Eckverbinder zusammenfallende Lochungen vorgesehen sind, in welche eine Schraube eindrehbar ist.

Nachteilig bei dieser Art der Festlegung ist, daß die Fertigungstoleranzen klein gehalten werden müssen, da ein Eindrehen der Schraube nur dann möglich ist, wenn die in den Stützen bzw. Holmen vorgesehene Lochung mit der jeweiligen in dem Eckverbinder vorgesehenen Gewindebohrung genau übereinstimmt. Des weiteren ist die Festlegung von Stützen und Holmen mit den Eckverbindern nicht mehr gewährleistet, wenn sich eine Befestigungsschraube im Laufe der Zeit - beispielsweise unter Einwirkung äußerer Vibrationen - einmal lockern sollte.

Aus der DE 195 29 270 C1 ist ein Rahmengestell für einen Schaltschrank bekannt, bei dem jedes Eckverbindungselement drei rechtwinklig zueinander stehende Schenkel umfaßt. Der Außenquerschnitt eines Innenschenkels ist an den Innenquerschnitt von Holme bzw. Stützen bildenden Hohlprofilen angepaßt, so daß die Hohlprofile auf den jeweils zugehörigen Schenkel aufgeschoben werden können, wonach der Schenkel den Innenquerschnitt des Hohlprofils nahezu vollständig ausfüllt. Zur Festlegung des jeweiligen Hohlprofils nach Aufschieben auf den Schenkel weist letzterer eine Mehrzahl von im Querschnitt rechteckigen Vertiefungen auf, in die der über der Vertiefung befindliche Wandungsbereich des Profils durch plastische Verformung in diesen hinein verlagert werden kann. Dabei kann die zur plastischen Verformung notwendige Kraft verringert werden, indem der plastisch zu verformende Bereich eine aus der Wand des Hohlprofils bestehende Zunge ist, deren freies, aus der Wand herausgestanztes Ende in die zugehörige Vertiefung des Schenkels eindrückbar ist.

Zwar besteht bei dieser Ausführungsform nicht die Gefahr des Lockerns von Befestigungsschrauben, nachteilig ist jedoch, daß eine Montage dieses Rahmengestells nur unter Verwendung von Spezialwerkzeugen möglich ist und die auf diese Weise erzielte Befestigungsstabilität geringer ist als eine durch Verschraubung bzw. Vernietung bewirkte.

Der Erfindung liegt daher die Aufgabe zugrunde, ein aus der DE 195 29 270 C1 bekanntes Rahmengestell derart weiterzuentwickeln, daß eine einfache und dauerhafte Verbindung der Stützen bzw. Holme mit den Eckverbindern möglich ist.

Diese Aufgabe wird durch die in Anspruch 1 wiedergegebene Erfindung gelöst.

Bei dem erfindungsgemäßen Rahmen weisen die Eckverbinder an den in eine Stütze oder einen Holm einführbaren Schenkel eingearbeitete Bohrungen auf, die zumindest auf einer der angrenzenden Innenwandung einer aufgeschobenen Stütze oder einem Holm zugewandten Seite einen Bereich mit einem größeren Durchmesser als in den Stützen bzw. Holmen vorgesehene Lochungen aufweist. Die Lochungen sind derart positioniert, daß bei eingeführtem Schenkel der Lochungsrand innerhalb des erweiterten Bereichs liegt. Der Festlegung einer Stütze bzw. eines Holms an dem jeweiligen eingeführten Schenkel des Eckverbinders dient vorzugsweise ein in die Bohrung einbringbares Befestigungsmittel, welches einen sich nach außen hin erweiternden Bereich aufweist, der größer als derjenige der Lochung ist.

Wenn die Bohrung in einen Bereich mit größerem Durchmesser mündet, d.h. als Stufenbohrung ausgebildet ist und die Lochung einen größeren Durchmesser aufweist als die Bohrung, ist das Befestigungsmittel auch beim Vorliegen erheblicher Fertigungstoleranzen noch problemlos einbringbar.

Beim Festlegen des Befestigungsmittels wird durch den sich nach außen erweiternden Abschnitt der in den erweiterten Bereich der Bohrung überstehende Rand der Lochung plastisch verformt und in den Bereich hineingedrückt, so daß der in die jeweilige Stütze bzw. den jeweiligen Holm eingeführte Schenkel des Eckverbinders auch nach erneutem Lösen des Befestigungsmittels festgelegt verbleibt.

Aus der DE-OS 1 465 347 ist ein Gerüst für Schaltschränke bekannt, das aus Stahlblechwinkelschienen gebildet ist, die an den Gerüstecken mit Knotenblechen verschraubt sind. Die Stahlblechwinkelschienen sind dazu mit einer Gehrung sowie mit Durchzügen versehen, die mit ihren Flanken aufeinander sitzen, wobei durch die Verschraubung die Pressung erzeugt wird.

Bei vorteilhaften Ausgestaltungen des Rahmengestells nach Anspruch 3 oder 4 sind die Befestigungsmittel als Senkkopfschraube oder -mutter ausgebildet, wodurch die Verformung des Randes durch einfaches Anziehen derselben bewirkt werden kann.

Vorteilhaft ist weiterhin die Ausgestaltung des Rahmengestells nach den Ansprüchen 5, 6 und 7. Durch diese Maßnahme wird bewirkt, daß bei fest angezogener Senkkopfschraube die Stirnseite des Senkkopfs etwa mit der Oberfläche der jeweiligen Stütze bzw. des jeweiligen Holmes abschließt.

Bei einer bevorzugten Ausgestaltung gemäß Anspruch 8 weist die Bohrung ein Innengewinde auf, in welches die Senkkopfschraube einschraubbar ist.

Besonders bevorzugt ist jedoch die Ausführungsform gemäß Anspruch 9, bei der die Bohrung einen Innendurchmesser aufweist, der kleiner ist als der Außendurchmesser des Schraubengewindes und wobei das Gewinde der Senkkopfschraube selbstschneidend ausgebildet ist. Durch diese Maßnahme sind die Fertigungskosten für einen Eckverbinder durch Einsparung des Gewindeschneidvorganges verringert.

Eine besonders hoch belastbare Festlegung der Holme bzw. Stützen an den Eckverbindern wird erzielt, wenn gemäß Anspruch 10 zur Verankerung je Holm bzw. Stütze an einem Schenkel eines Eckverbinders mindestens zwei Mittel zur Verankerung vorgesehen sind. Das Rahmengestell weist hierzu vorzugsweise die Merkmale der Ansprüche 11 bis 13 oder 11, 12 und 14 auf.

Die Erfindung betrifft auch einen Schaltschrank, der mit einem erfindungsgemäßen Rahmengestell ausgestattet ist.

Ein Ausführungsbeispiel eines erfindungsgemäßen Rahmengestells ist in der Zeichnung dargestellt.

Es zeigen:
Fig. 1 ein erfindungsgemäßes Rahmengestell in einer perspektivischen Darstellung, dessen Frontseite durch zusätzlich eingesetzte Längsund Querträger für den Einsatz bestimmter Schaltelemente vorbereitet ist;
Fig. 2 - perspektivisch - einen Bereich eines Eckverbinders im Ausschnitt, wobei der untere Holm von den Schenkeln des Eckverbinders abgezogen ist;
Fig. 3 einen Eckverbinder in einer Ansicht von seiten eines aus der Zeichenebene senkrecht herausstehenden Schenkels;
Fig. 4 eine Ansicht der gegenüberliegenden Seite des Eckverbinders (gemäß Fig. 3 von hinten);
Fig. 5 ein Querschnitt durch eine Ausführungsform eines die Stützen und Holme bildenden Rahmenprofils;
Fig. 6 einen Querschnitt durch ein auf einen Schenkel eines Eckverbinder aufgeschobenen und an diesem mit einer ersten Ausführungsform eines Befestigungselements festgelegten Rahmenprofils;
Fig. 7 den Ausschnitt I aus Fig. 6 in einer vergrößerten Darstellung;
Fig. 8 eine zweite Ausführungsform eines Befestigungselements in einer Fig. 6 entsprechenden Darstellung sowie
Fig. 9 eine dritte Ausführungsform eines Befestigungselements in einer Fig. 6 und 8 entsprechenden Darstellung.

Wenn im folgenden von "vorn" die Rede ist, so bezieht sich die Angabe auf die einem Verwender üblicherweise zugewandte Frontseite des Rahmengestells. Die Angaben "links" und "rechts" beziehen sich dementsprechend auf den Betrachtersinn eines die Frontseite betrachtenden Verwenders, die Angaben "oben" und "unten" beziehen sich auf ein Rahmengestell, welches sich in seiner aufrechten Betriebsposition befindet.

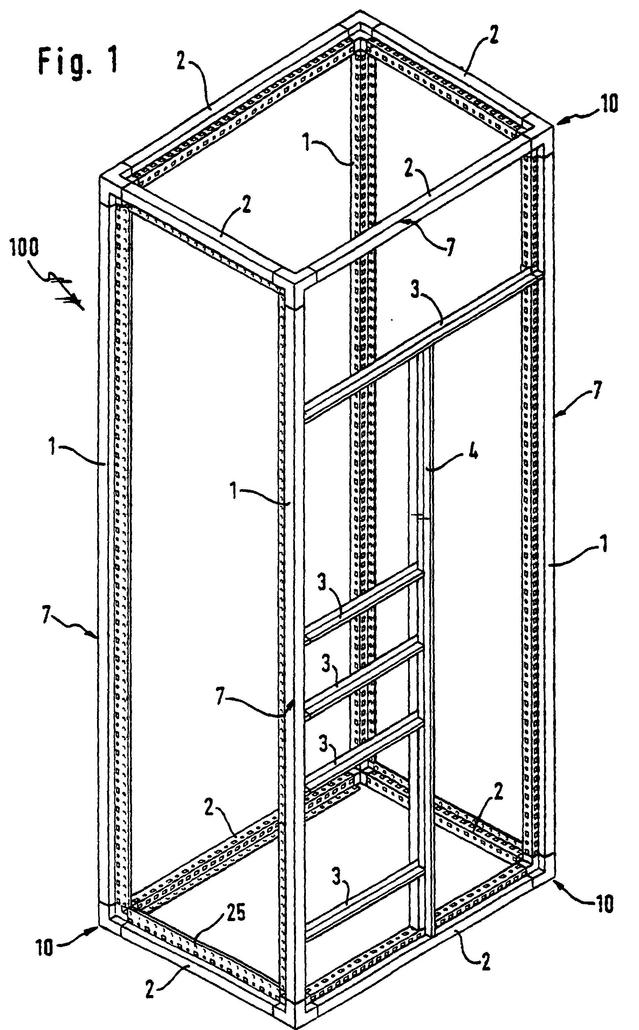

Das in Fig.1 als Ganzes mit 100 bezeichnete Rahmengestell umfaßt vertikale Stützen 1 sowie waagerechte Holme 2, die längs den Kanten des mit Hilfe des Rahmens zu bildenden Schaltschrankgehäuses verlaufen. In dem Rahmen ist eine Anordnung von Querträgern 3 und Längsträgern 4 in die Frontseite eingesetzt, die der Vorbereitung des Schaltschranks für die Montage einer bestimmten Anordnung von elektrischen Schaltelementen dienen.

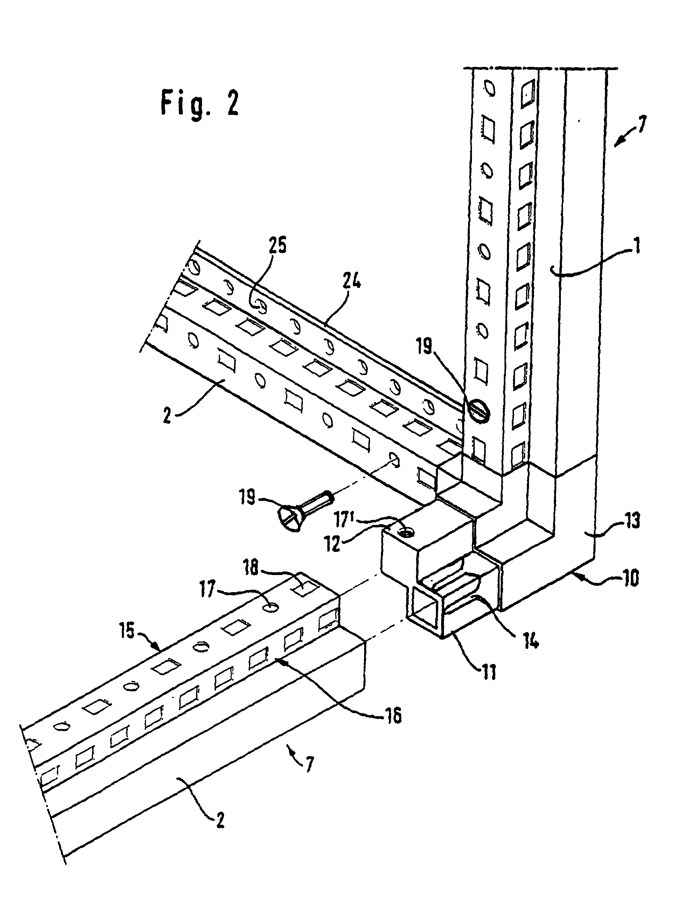

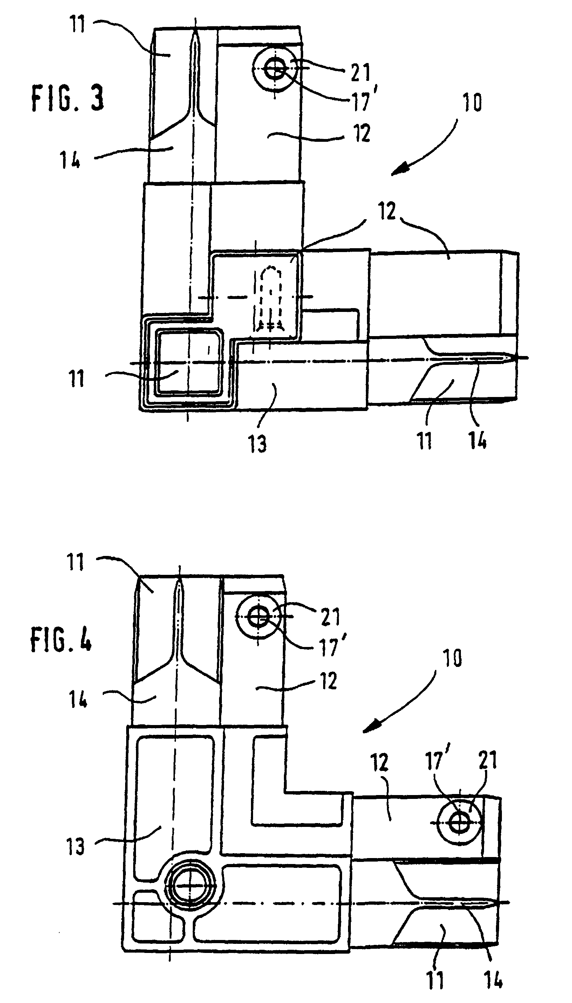

Der Verbindung der Stützen 1 und der Holme 2 in den Eckbereichen des Rahmens 100 dienen Eckverbinder 10, deren Aufbau anhand von Fig. 2, 3 und 4 noch erläutert werden wird.

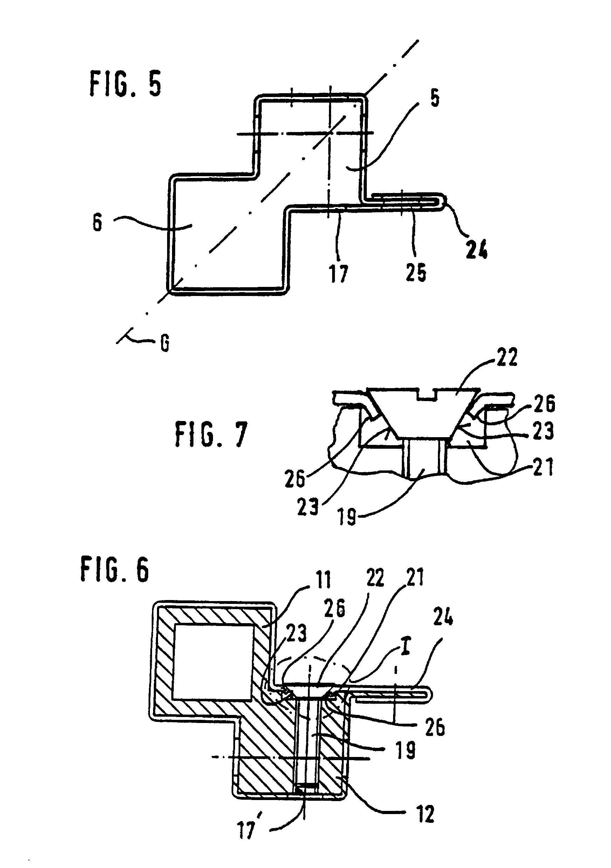

Die Stützen 1 und die Holme 2 weisen im Querschnitt ein doppelt quadratisches Profil auf, wobei die quadratischen Einzelquerschnitte derart ausgerichtet sind, daß jeweils eine ihrer Diagonalen auf einer gemeinsamen Graden G liegt (vgl. Fig. 5). Eine Stütze 1 bzw. ein Holm 2 besteht demnach im wesentlichen aus einem aus zwei Profilen quadratischen Querschnitt zusammengesetzten Doppelprofil, wobei diese Profile so angeordnet sind, daß die erste Kammer 5 dem Gehäuseinneren des Schaltschranks zugewandt ist, wogegen die zweite Kammer 6 einen bezüglich des Gehäuseinneren nach außen versetzten Eckbereich 7 des Schaltschranks bildet. Die Außenflächen der Stützen 1 bzw. der Holme 2 verlaufen dabei parallel bzw. senkrecht zu den Seitenflächen des Gehäuses.

Zur Befestigung von in der Zeichnung nicht dargestellten Seitenwänden sind an den dem Gehäuseinneren zugewandten Teilen der Stützen 1 bzw. Holme 2 Profilvorsprünge 24 vorgesehen, welche sich über die gesamte Länge der Stützen 1 bzw. Holme 2 erstrecken und mit einer regelmäßigen Lochreihe 25 versehen sind.

Wie aus Fig. 2 ersichtlich ist, umfaßt ein Eckverbinder 10 auf seinen der Befestigung von Stützen bzw. Holmen dienenden Seiten jeweils einen äußeren und einen inneren Schenkel 11, 12, deren Querschnitt an die Stützen bzw. Holme angepaßt und die somit in dieselben einführbar sind.

Um zu vermeiden, daß es aufgrund von Fertigungstoleranzen zu einem geringfügigen Spiel der Schenkel in den Stützen 1 bzw. den Holmen kommen kann, sind an dem äußeren Schenkel 11 sich zur Basis 13 des Eckverbinders 10 sich in zunehmendem Maße erhebende Längsvorsprünge 14 vorgesehen, die beim Aufschieben einer Stütze 1 oder eines Holmes 2 einen leichten Preßsitz desselben auf dem äußeren Schenkel 11 bewirken.

Die die innere Profilkammer 5 begrenzenden Seitenwände der Stützen 1 bzw. der Holme 2 sind mit Lochreihen 15, 16 versehen, von denen bei dem dargestellten Ausführungsbeispiel jeweils zwei einander gegenüberliegend angeordnete aus einer abwechselnden Folge von kreisrunden und rechteckigen Lochungen 17, 18 bestehen. Der innere, in der Zeichnung aus Vollmaterial bestehende Schenkel 12 des Eckverbinders 10 ist mit einer Bohrung 17' versehen, welche im in die Stütze 1 bzw. den Holm 2 eingeschobenen Zustand des Schenkels mit der Lochung 17 kommuniziert. Der Festlegung von auf die Schenkel 11, 12 eines Eckverbinders 10 aufgeschobenen Stützen 1 bzw. Holme 2 dienen Senkkopfschrauben 19, welche durch eine Lochung 17 in eine mit dieser kommunizierende Bohrung 17' eingedreht sind.

Die besondere Ausgestaltung und Dimensionierung der Bohrung 17 und der Lochung 17' sowie die genaue Wirkungsweise der Festlegung wird aus Fig. 6 ersichtlich.

Die Bohrung 17', die wahlweise - je nachdem, ob eine selbstschneidende Senkkopfschraube 19 verwendet werden soll oder nicht - mit einem Innengewinde versehen sein kann, mündet auf einer der angrenzenden Innenwandung einer aufgeschobenen Stütze 1 oder einem aufgeschobenen Holm 2 zugewandten Seite in einen Bereich 21, der einen größeren Durchmesser als die Bohrung 17' aufweist. Die mit der Bohrung 17' in der Strebe 1 bzw. dem Holm 2 vorgesehene Lochung 17 weist einen kreisrunden Querschnitt eines Durchmessers auf, der mindestens demjenigen der Bohrung 17' entspricht, jedoch kleiner als der Durchmesser des Bereichs 21 ist.

Wie insbesondere aus Fig. 7 ersichtlich ist, wird durch diese Ausgestaltung bewirkt, daß beim Eindrehen der Senkkopfschraube 19 durch die Kegelflächen 23 des Senkkopfs 22 die über den Bereich 21 überstehenden Ränder 26 derart formschlüssig verformt werden, daß die Ränder 26 in den Bereich 21 hineinragen, so daß auch nach Entfernen der Senkkopfschraube 19 die Stütze 1 bzw. der Holm 2 nicht mehr von dem Schenkel des Eckverbinders 10 abgezogen werden kann, andererseits werden - sofern der Durchmesser der Lochung 17 größer als derjenige der Bohrung 17' gewählt wird - Fertigungstoleranzen, die dazu führen, daß die Lochung 17 und Bohrung 17' nicht konzentrisch übereinanderliegen, ausgeglichen.

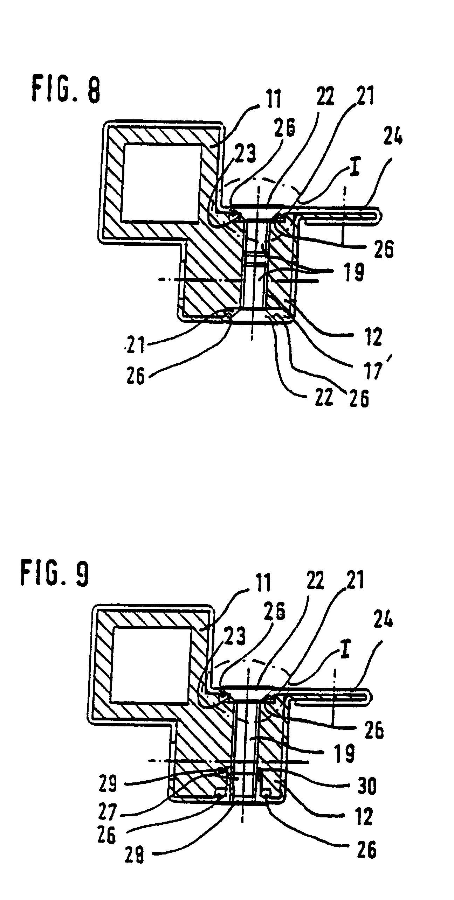

Zur Erhöhung der mechanischen Belastbarkeit der Verbindung zwischen Eckverbinder 10 und Stütze 1 bzw. Holm 2 sind in den Fig. 8 und 9 pro Schenkel des Eckverbinders 10 zwei Befestigungselemente vorgesehen. Im Falle der in Fig. 8 dargestellten Anordnung sind von beiden Seiten der Bohrung 17' sich in ihrer Ausgestaltung entsprechende Senkkopfschrauben 19 eingedreht. Die Bohrung 17', die sich durch den Eckverbinder 10 erstreckend an beiden Enden in sich entsprechende Bereiche 21 mündet, kann - je nachdem, ob selbstschneidende oder mit einem nicht selbstschneidenden Gewinde versehene Senkkopfschrauben verwendet werden sollen - mit einem Innengewinde versehen sein. Durch Eindrehen der beiden Senkkopfschrauben 19 findet die anhand von Fig. 7 beschriebene Festlegung von Stütze 1 bzw. Holm 2 auf beiden Seiten statt.

Bei dem in Fig. 9 dargestellten Ausführungsbeispiel ist das zweite Befestigungsmittel, welches hinsichtlich einer Funktion der zweiten Senkkopfschraube der in Fig. 8 dargestellten Ausführungsform entspricht, als Senkkopfmutter 27 ausgebildet, in die die von der gegenüberliegenden Seite der Bohrung 17' eingeschobene Senkkopfschraube 19 einschraubbar ist. Beim Eindrehen der Senkkopfschraube 19 in die Senkkopfmutter 27 bewirkt der Konus des Senkkopfes 28 wiederum, daß die überstehenden Ränder 26 der Lochung 17 in den Bereich 21 hinein verformt werden, so daß wiederum die anhand von Fig. 7 beschriebene Wirkung erzielt wird.

Die Bohrung 17' ist bei diesem Ausführungsbeispiel nicht mit einem Gewinde versehen. Als Senkkopschrauben können selbstschneidende oder nichtselbstschneidende Verwendung finden, je nachdem, ob mit Gegengewinde versehene Muttern verwendet werden sollen. Die Bohrung 17' weist an den Bereich 21 einen sich auf Seiten der Senkkopfmutter 27 anschließenden, erweiterten Bereich 29 auf, in den die Senkkopfmutter 27 mit einem unterhalb des Senkkopfes vorhandenen zylindrischen Fortsatz 30 hineinragt. Es ist jedoch auch möglich, Senkkopfschrauben ohne Fortsatz zu verwenden, wenn die Tiefe des Bereichs 21 und die Länge der Senkkopfschraube 19 dies erlauben.

## Patentansprüche

1. Rahmengestell für einen Schaltschrank für elektrische Anlagen, dessen vertikale Stützen (1) und waagerechte Holme (2) längs den Kanten des Rahmengestells verlaufen,
mit Eckverbindern (10), die in die Enden der Stützen (1) und Holme (2) einführbare Schenkel (11,12) umfassen,
mit Mitteln zur Verankerung eines in eine Stütze (1) oder in einen Holm (2) eingeführten Schenkels (11, 12) in der Stütze (1) oder dem Holm (2), wobei
ein Mittel zur Verankerung
eine in den Schenkel (11, 12) eingearbeitete Bohrung (17'), die zumindest auf einer der angrenzenden Innenwandung (20) einer aufgeschobenen Stütze (1) oder einem aufgeschobenen Holm (2) zugewandten Seite zumindest einen Bereich (21) mit einem größeren Durchmesser als eine in die Stütze (1) bzw. in den Holm (2) eingearbeitete Lochung (17) aufweist, die derart angeordnet ist, daß bei eingeführtem Schenkel (11, 12) die Lochung (17) innerhalb des Bereichs (21) liegt, so daß der Rand der Lochung (17) zumindest teilweise in den Bereich (21) übersteht, umfaßt,
wobei das Mittel zur Verankerung ferner
ein in die Bohrung (17') eingebrachtes Befestigungsmittel zur Festlegung der Stütze (1) oder des Holms (2), an dem eingeführten Schenkel des Eckverbinders umfaßt,
**dadurch gekennzeichnet, daß** mit dem Befestigungsmittel, der in den Bereich (21) überstehende Rand der Lochung (17) bei der Einbringung des Befestigungsmittels derart plastisch verformt wird, daß der Rand nach der Verformung zumindest teilweise in den Bereich (21) hineinragt.

2. Rahmengestell nach Anspruch 1, **dadurch gekennzeichnet, daß** das Befestigungsmittel einen in den Bereich (21) einbringbaren, sich nach außen erweiternden Abschnitt aufweist, wobei der Abschnitt zumindest teilweise einen Durchmesser aufweist, der größer als derjenige der Lochung (17) ist.

3. Rahmengestell nach Anspruch 2, **dadurch gekennzeichnet, daß** das Befestigungsmittel eine in der Bohrung (17') festlegbare Senkkopfschraube (19) umfaßt, deren Senkkopf (22) den sich erweiternden Abschnitt bildet.

4. Rahmengestell nach Anspruch 2 oder 3, **dadurch gekennzeichnet, daß** das Befestigungsmittel eine Senkkopfmutter (27) umfaßt, deren Senkkopf (28) den sich erweiternden Abschnitt bildet.

5. Rahmengestell nach einem der Ansprüche 1 bis 4, **dadurch gekennzeichnet, daß** der Durchmesser des Bereichs (21) etwa um die doppelte Wandstärke der Stützen (1) bzw. Holme (2) größer ist als der Durchmesser der Lochung (17).

6. Rahmengestell nach einem der Ansprüche 1 bis 5, **dadurch gekennzeichnet, daß** die Tiefe (T) des Bereichs mindestens der Wandstärke der Stützen (1) bzw. Holme (2) entspricht.

7. Rahmengestell nach einem der Ansprüche 3 bis 6, **dadurch gekennzeichnet, daß** der Durchmesser des Senkkopfes (22) dem Durchmesser des Bereichs (21) entspricht.

8. Rahmengestell nach einem der Ansprüche 3 bis 7, **dadurch gekennzeichnet, daß** die Bohrung (17') ein Innengewinde aufweist, in welches die Senkkopfschraube (19) einschraubbar ist.

9. Rahmengestell nach einem der Ansprüche 3 bis 7, **dadurch gekennzeichnet, daß** die Bohrung (17') einen Durchmesser aufweist, der kleiner ist als der Außendurchmesser der Gewindes der Senkkopfschraube (19) und daß das Gewinde der Senkkopfschraube (19) selbstschneidend ausgebildet ist.

10. Rahmengestell nach einem der Ansprüche 1 bis 9, **dadurch gekennzeichnet, daß** zur Verankerung eines in eine Stütze (1) oder einen Holm (2) eingeführten Schenkels (11, 12) in der Stütze (1) oder dem Holm (2) mindestens zwei Mittel zur Verankerung vorgesehen sind.

11. Rahmengestell nach Anspruch 10, **dadurch gekennzeichnet, daß** die Mittel zur Verankerung auf einander gegenüberliegenden Seiten der Stütze (1) oder des Holms (2) vorgesehen sind.

12. Rahmengestell nach Anspruch 11, **dadurch gekennzeichnet, daß** die Bohrung (17') durchgehend angeordnet ist und an beiden Enden Bereiche (21) aufweist.

13. Rahmengestell nach Anspruch 12, **dadurch gekennzeichnet, daß** die Befestigungsmittel zwei von beiden Seiten in die Bohrung (17') einschraubbare Senkkopfschrauben (19) umfassen.

14. Rahmengestell nach Anspruch 13, **dadurch gekennzeichnet, daß** die Befestigungsmittel eine in die Bohrung (17') einführbare Senkkopfschraube (19) und eine auf die Senkkopfschraube (19) aufschraubbare Senkkopfmutter (27) umfassen.

15. Schaltschrank, der mit einem Rahmengestell nach einem der Ansprüche 1 bis 14 ausgestattet ist.

## Claims

1. Frame structure for a switchgear cabinet for electrical equipment, of which the vertical supports (1) and horizontal shafts (2) run along the edges of the frame structure,
with corner connectors (10), which comprise arms (11, 12), which can be inserted into the ends of the supports (1) and shafts (2),
with means for anchoring an arm (11, 12) inserted into a support (1) or a shaft (2) in the support (1) or shaft (2), wherein a means for anchoring comprises a bore hole (17') worked into the arm (11, 12), which comprises, at least one side facing towards the adjacent interior wall (20) of a fitted support (1) or a fitted shaft (2), at least one region (21) with a larger diameter than a perforation (17) worked into the support (1) or into the shaft (2), which is arranged in such a manner that with the arm (11, 12) inserted, the perforation (17) lies within the region (21), so that the edge of the perforation (17) overhangs at least partly into the region (21),
wherein the means for anchoring furthermore comprises a fastening means fitted into the bore hole (17') for fastening the support (1) or the shaft (2) to the inserted arm of the corner connection,
**characterised in that** the edge of the perforation (17) overhanging into the region (21) is subjected to plastic deformation by the fastening means on introduction of the fastening means, in such a manner that after the said deformation, the edge projects at least partly into the region (21).

2. Frame structure according to claim 1, **characterised in that** the fastening means provides an outwardly expanding section which can be introduced into the region (21), wherein the section at least partially provides a diameter larger than that of the perforation (17).

3. Frame structure according to claim 2, **characterised in that** the fastening means comprises a countersunk-head screw (19), which can be fixed in the bore hole (17'), of which the countersunk head forms the expanding section.

4. Frame structure according to claim 2 or 3, **characterised in that** the fastening means comprises a countersunk-head nut (27) of which the countersunk head (28) forms the expanding section.

5. Frame structure according to any one of the claims 1 to 4, **characterised in that** the diameter of the region (21) exceeds the diameter of the perforation (17) by approximately double the wall thickness of the supports (1) or shafts (2).

6. Frame structure according to any one of claims 1 to 5, **characterised in that** the depth (T) of the region corresponds at least to the wall thickness of the supports (1) or shafts (2).

7. Frame structure according to any one of claims 3 to 6, **characterised in that** the diameter of the countersunk head (22) corresponds to the diameter of the region (21).

8. Frame structure according to any one of claims 3 to 7, **characterised in that** the bore hole (17') provides an internal thread, into which the countersunk-head screw (19) can be screwed.

9. Frame structure according to any one of claims 3 to 7, **characterised in that** the bore hole (17') provides a diameter, which is smaller than the outer diameter of the thread of the countersunk-head screw (19) and that the thread of the countersunk head screw (19) is designed as a self-threading screw.

10. Frame structure according to any one of the claims 1 to 9, **characterised in that** at least two anchoring means are provided in order to anchor an arm (11, 12) introduced into a support (1) or a shaft (2) in the support (1) or shaft (2).

11. Frame structure according to claim 10, **characterised in that** the anchoring means are provided on mutually opposing sides of the support (1) or the shaft (2).

12. Frame structure according to claim 11, **characterised in that** the bore hole (17') is arranged in a continuous manner and provides regions (21) at both ends.

13. Frame structure according to claim 12, **characterised in that** the fastening means comprise two countersunk-head screws (19) which can be screwed into the bore hole (17') from both sides.

14. Frame structure according to claim 13, **characterised in that** the fastening means comprise one countersunk-head screw (19), which can be inserted into the bore hole (17'), and one countersunk-head nut (27) which can be screwed onto the countersunk-head screw.

15. Switchgear cabinet, which is fitted with a frame structure according to any one of claim 1 to 14.

## Revendications

1. Baie d'armoire électrique pour des installations électriques dont les montants verticaux (1) et les branches horizontales (2) passent le long des arêtes de la baie, comportant :
- des connecteurs d'angle (10) muni de branches (11, 12) qui s'introduisent dans les extrémités des montants (1) et des traverses (2) ;
- des moyens pour accrocher dans le montant (1) ou la traverse (2), la branche (11, 12) introduite dans le montant (1) ou la traverse (2) ;
- les moyens d'accrochage ;
- un perçage (17') réalisé dans les branches (11, 12) ayant au moins sur une paroi intérieure (20) adjacente à un montant (1) engagé ou une traverse (2) engagée, au moins une zone (21) de plus grand diamètre que le perçage (17) réalisé dans le montant (1) ou la traverse (2), de façon que lorsque la branche (11, 12) est engagée, le perçage (17) se situe dans la zone (21) pour que le bord du perçage (17) dépasse au moins partiellement dans la zone (21);
- le moyen d'accrochage comprend un moyen de fixation introduit dans le perçage (17') pour bloquer le montant (1) ou la traverse (2) au niveau de la branche du connecteur d'angle, introduit,
**caractérisée en ce que**
le moyen de fixation déforme plastiquement le bord du perçage (17) en saillie dans la zone (21) lors de l'introduction du moyen de fixation de façon qu'après la déformation le bord pénètre au moins partiellement dans la zone (21).

2. Baie selon la revendication 1,
**caractérisée en ce que**
le moyen de fixation comporte un segment qui s'introduit dans la zone (21) et s'élargit vers l'extérieur, le segment ayant au moins partiellement un diamètre supérieur à celui du perçage (17).

3. Baie selon la revendication 2,
**caractérisée en ce que**
le moyen de fixation comprend une vis à tête fraisée (19) qui se fixe dans le perçage (17') et dont la tête fraisée (22) constitue un segment allant en s'élargissant.

4. Baie selon la revendication 2 ou 3,
**caractérisée en ce que**
le moyen de fixation est un écrou à tête fraisée (27) dont la tête (28) forme le segment élargi.

5. Baie selon les revendications 1 à 4,
**caractérisée en ce que**
le diamètre de la zone (21) est supérieur sensiblement du double de l'épaisseur de paroi des montants (1) ou traverses (2) par rapport au diamètre du perçage (17).

6. Baie selon les revendications 1 à 5,
**caractérisée en ce que**
la profondeur de la zone correspond au moins à l'épaisseur de parois du montant (1) ou de la traverse (2).

7. Baie selon les revendications 3 à 6,
**caractérisée en ce que**
le diamètre de la tête fraisée (22) correspond au diamètre de la zone (21).

8. Baie selon les revendications 3 à 7,
**caractérisée en ce que**
le perçage (17') présente un filetage intérieur recevant par vissage la vis à tête fraisée (19).

9. Baie selon les revendications 3 à 7,
**caractérisée en ce que**
le perçage (17') a un diamètre inférieur au diamètre extérieur du filetage de la vis à tête fraisée (19) et le filetage de la vis à tête fraisée (19) est auto-taraudant.

10. Baie selon les revendications 1 à 9,
**caractérisée par**
au moins deux moyens d'accrochage pour accrocher une branche (11, 12) introduite dans un montant (1) ou une traverse (2), pour assurer l'accrochage dans le montant (1) ou la traverse (2).

11. Baie selon la revendication 10,
**caractérisée en ce que**
les moyens d'accrochage sont prévus sur les côtés opposés du montant (1) ou de la traverse (2).

12. Baie selon la revendication 11,
**caractérisée en ce que**
le perçage (17') est traversant et comporte des zones (21) aux deux extrémités.

13. Baie selon la revendication 12,
**caractérisée en ce que**
les moyens de fixation sont des vis à tête fraisée (19) qui se vissent par les deux côtés dans le perçage (17').

14. Baie selon la revendication 13,
**caractérisée en ce que**
les moyens de fixation comprennent une vis à tête fraisée (19) qui s'introduit dans le perçage (17') et un écrou à tête fraisée (27) qui se visse sur la vis à tête fraisée (19).

15. Armoire électrique comportant une baie selon l'une des revendications 1 à 14.
